# EUROPÄISCHE PATENTSCHRIFT

(11) **EP 0 539 400 B1**
(45) Veröffentlichungstag und Bekanntmachung des Hinweises auf die Patenterteilung: **19.01.1994**
(21) Anmeldenummer: 91911880.2
(22) Anmeldetag: 29.06.1991
(51) Int. Cl.: G01N 29/26

(54) **ROTOR EINER ULTRASCHALL-PRÜFVORRICHTUNG FÜR ROTATIONSSYMMETRISCHE PRÜFSTÜCKE, INSBESONDERE ROHRE**
ROTOR OF AN ULTRASONIC TESTING DEVICE FOR ROTATION-SYMMETRICAL TEST-PIECES, ESPECIALLY PIPES
ROTOR DE DISPOSITIF DE CONTROLE AUX ULTRA-SONS POUR EPROUVETTES D'ESSAI A SYMETRIE DE ROTATION, NOTAMMENT TUYAUX

(30) Priorität: 03.07.1990 DE 9010086 U
(43) Veröffentlichungstag der Anmeldung: 05.05.1993
(73) Patentinhaber: KRAUTKRÄMER GmbH & Co., D-50354 Hürth (DE)
(72) Erfinder: PATZKE, Ottokar, D-5042 Erftstadt (DE)
(74) Vertreter: Bauer, Wulf, Dr.
(86) Internationale Anmeldenummer: DE9100543
(87) Internationale Veröffentlichungsnummer: WO9201221

(56) Entgegenhaltungen:
- EP-A- 45 265
- EP-A- 131 371
- WO-A-89/07239

## Beschreibung

Die Erfindung bezieht sich auf einen Rotor einer Ultraschall-Prüfvorrichtung für rotationssymmetrische Prüfstücke, insbesondere Rohre, wobei der Rotor einen Prüfkopfträger aufnimmt, der a) in einer radialen Bohrung angeordnet ist, b) mindestens einen Prüfkopf enthält, c) in Richtung der Achse der Bohrung längsverstellbar angeordnet ist und d) in der Bohrung abgedichtet gehalten ist. Ein derartiger Rotor ist aus EP-A-0 131 371 bekannt.

Prüfvorrichtungen dieser Art sind für die Prüfung über die gesamte Prüfstücklänge und/oder nur für die Prüfung von Endbereichen eines Prüfstücks bekannt. Die Prüfung über die gesamte Prüfstücklänge erfolgt im allgemeinen im Durchlaufbetrieb, der Rotor bleibt bei seiner Drehung ortsfest, das Prüfstück wird entlang seiner Längsachse axial durch den Rotor hindurchbewegt. Allgemein wird zum Stand der Technik verwiesen auf das Buch J. und H. Krautkrämer "Werkstoffprüfung mit Ultraschall", 5. Aufl., Springer-Verlag, dort insbesondere der Abschnitt "Rohre", in dem Prüfanlagen für Rohre beschrieben werden.

Derartige Prüfvorrichtungen sind für rotationssymmetrische Prüfstücke allgemeiner Art bestimmt, hierunter wird nicht nur Rundmaterial wie insbesondere Rohre oder auch Stangen, sondern auch im Querschnitt regelmäßiges, vieleckiges Material, wie beispielsweise Sechskantstangen usw. verstanden. Insoweit wird auf die DE-A-38 03 151 sowie die nicht vorveröffentlichte DE-A-39 08 967 verwiesen.

Bei der vorbenutzten Rotationsprüfanlage für Rohre zwischen 20 und 180 mm Durchmesser Typ ROT 180 der Firma Krautkrämer GmbH & Co wird ein Rotor der eingangs genannten Art eingesetzt. Seine beiden Endbereiche sind gegenüber den Prüfstücken so abgedichtet, daß die Zentralbohrung des Rotors mit Wasser oder einer anderen, geeigneten Ankopplungsflüssigkeit gefüllt werden kann. Der Prüfkopfträger ist in einer quer zur Achse des Prüfstücks vorgesehenen, radialen Bohrung des Rotors verschiebbar angeordnet, der Prüfkopfträger selbst ist als eine Art Kolben ausgeführt. Durch die radiale Verstellung können Prüfstücke unterschiedlichen Durchmessers gezielt angestellt werden, weiterhin kann der Prüfkopf vor dem Einlaufen eines Prüfstücks in eine geschützte Position zurückgezogen werden. Die Zentralbohrung ist auch radial nach außen abgedichtet, im Bereich des Prüfkopfträgers durch eine Abdichtung zwischen der Bohrung und dem Prüfkopfträger. Dadurch kann auch keine Ankopplungsflüssigkeit radial nach außen treten.

Mit der vorbekannten Vorrichtung können Längs-und Querfehler erfaßt werden, weiterhin kann die Wanddicke bestimmt werden. Schräg im Prüfstück liegende Fehler (Schrägfehler) können nicht sicher nachgewiesen werden.

Hier setzt die Erfindung ein. Sie hat es sich zur Aufgabe gemacht, den vorbekannten Rotor der eingangs genannten Art dahingehend weiterzuentwickeln, daß in Ergänzung zu bestehenden Prüfmöglichkeiten auch eine Schrägfehlerprüfung in Ultraschall-Rotationsprüfanlagen durchgeführt werden kann.

Diese Aufgabe wird dadurch gelöst, daß der Prüfkopfträger innerhalb der Bohrung um die Achse dieser Bohrung dreheinstellbar angeordnet ist. Eine Verdrehung des Prüfkopfträgers in seiner Bohrung war nach dem Stande der Technik weder vorgesehen noch sinnvoll, weil bei der vorbekannten Ausrichtung der Prüfköpfe durch eine Drehung kein physikalischer Effekt erreicht wurde. Insbesondere in Kombination mit einem Winkelprüfkopf oder einem neigungseinstellbaren Prüfkopf jedoch läßt sich durch die Drehung des Prüfkopfträgers innerhalb seiner Bohrung der Einschallwinkel zusätzlich einstellen. Auf diese Weise werden für Rotoren Prüfbahnen erreicht, die stufenlos zwischen jeder Prüfspiralensteigung (reiner Querschnittsprüfung mit kreisförmiger Prüfbahn) und reiner Längsprüfung (mit Prüfbahn in Längsrichtung) erreicht.

In einer bevorzugten Weiterbildung ist vorgesehen, daß der Prüfkopf um eine quer zur Achse der Bohrung des Rotors verlaufende Schwenkachse neigungseinstellbar ist, daß der Prüfkopf ein erstes Schraubteil aufweist, das sich außerhalb dieser Schwenkachse befindet, und daß diesem ersten Schraubteil ein zweites Schraubteil zugeordnet ist, das sich in Richtung der Achse der Bohrung erstreckt und mit einer an der Außenseite des Prüfkopfträgers zugänglichen Dreheinstellvorrichtung verbunden ist.

Durch diese Maßnahmen ist der Prüfkopf innerhalb des Prüfkopfträgers neigungseinstellbar. Die beschriebene Konstruktion eignet sich für die hohen Zentrifugalbeschleunigungen, die im Bereich von Rotoren auftreten. Eine reproduzierbare Neigungsverstellung von der Mantelfläche des Rotors her wird erreicht. Vorteilhafterweise ist die Dreheinstellvorrichtung mit einer Skala verbunden, so daß der jeweils eingestellte Winkel unmittelbar abgelesen werden kann. Über die Dreheinstellvorrichtung wird die Einstellbewegung auf das zweite Schraubteil, das vorzugsweise als im Prüfkopf gelagerte Spindel ausgebildet ist, übertragen. Dieses wiederum steht im Eingriff mit dem ersten Schraubteil, das die Einstellbewegung auf den Prüfkopf überträgt.

In einer bevorzugten Weiterbildung schneidet die Schwenkachse des Prüfkopfs die Bohrungsachse rechtwinklig. Dies führt zu einer vereinfachten Einstellung des Einschallwinkels bei kombinierter Einstellung durch Drehen des Prüfkopfträgers sowie Verschwenken des Prüfkopfes.

Ebenfalls als vorteilhaft hat es sich erwiesen, den Prüfkopf mittig auf der Achse der Bohrung des Rotors anzuordnen. Auch dies führt zu einer Vereinfachung der Einstellung des Einschallwinkels.

Andererseits lassen sich durch eine Anordnung des Prüfkopfes im Abstand von der Achse der Bohrung und/oder eine Anordnung der Schwenkachse im Abstand von dieser Achse der Bohrung für Spezialaufgaben Einschallwinkel und Einschallorte einstellen, die mit der beschriebenen Anordnung des Prüfkopfes mittig auf der Bohrungsachse und einer Schwenkachse, die die Achse der Bohrung schneidet, nicht erreichbar sind. Eine Einstellung auf unterschiedliche Prüfstückdurchmesser ist nach wie vor erforderlich.

In einer bevorzugten Ausführung ist der Prüfkopf (im physikalischen Sinne) L-ähnlich ausgebildet, er hat einen ersten L-Schenkel, der ein Ultraschallelement aufnimmt und einen zweiten L-Schenkel, an dem das erste Schraubteil angeordnet ist. Diese Anordnung kann gelenkig erfolgen, das erste Schraubteil kann aber auch als Zahnsegment ausgebildet sein, in diesem Fall ist es mit dem zweiten Schenkel starr verbunden, vorzugsweise einstückig. Die beiden Schenkel stehen in einem rechten Winkel zueinander. Die äußere Form des Prüfkopfes kann scheibenförmig, segmentförmig, L-förmig oder dergleichen sein.

Weitere Vorteile und Merkmale der Erfindung ergeben sich aus den weiteren Ansprüchen sowie der nun folgenden Beschreibung von drei nicht einschränkend zu verstehenden Ausführungsbeispielen, die unter Bezugnahme auf die Zeichnung näher erläutert werden. In dieser zeigen:
- Fig. 1: einen Radialschnitt durch einen Rotor (teilweise) mit Prüfstück in Forme eines Rohres,
- Fig. 2: einen Schnitt in Richtung der Schnittlinie II - II in Fig. 1,
- Fig. 3: eine Untersicht auf einen in einer radialen Bohrung eines Rotors angeordneten Halter, in dem zwei Prüfkopfträger dreheinstellbar angeordnet sind,
- Fig. 4: eine Darstellung entsprechend Fig. 3, wobei jeder Prüfkopfträger zwei Prüfköpfe hat und
- Fig. 5: eine Darstellung entsprechend Fig. 3, jedochmit einem Halter, in dem vier Prüfkopfträger untergebracht sind.

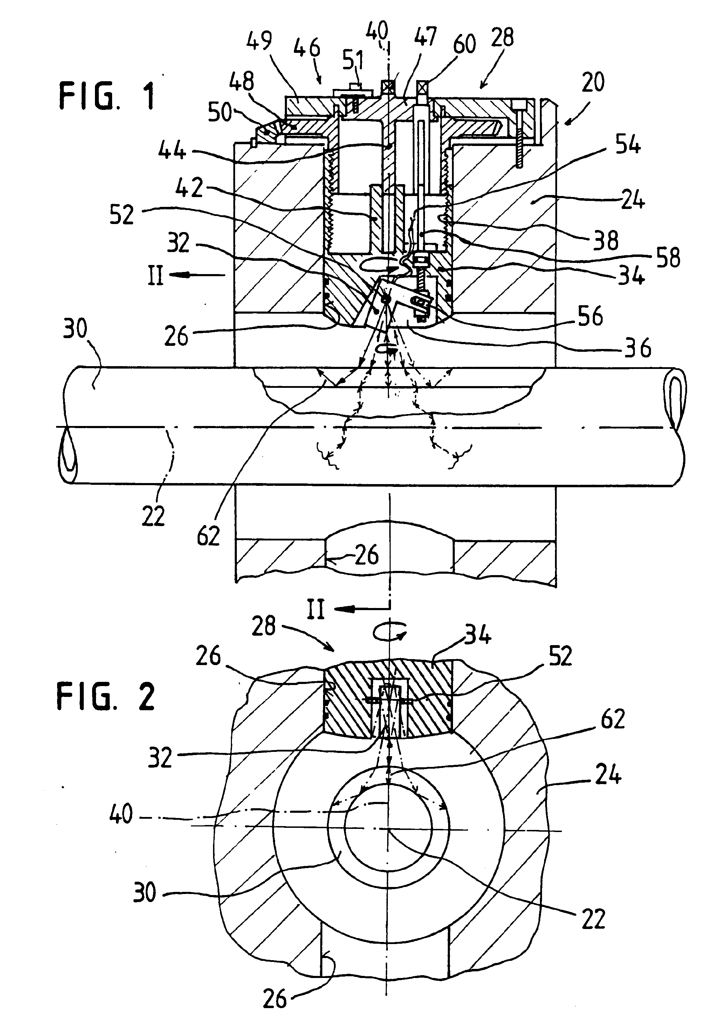

Im ersten Ausführungsbeispiel nach den Figuren 1 und 2 ist ein Rotor 20 dargestellt, der mittels einer bekannten Vorrichtung um eine Rotationsachse 22 gedreht werden kann. Er hat einen Rotorkörper 24, in dem exakt gegenüberliegend zwei radiale Bohrungen 26 ausgebildet sind. Die obere Bohrung 26 füllt ein Prüfkopfträger 28 aus, der im wesentlichen die Form eines zylindrischen Kolbens hat. An seiner, in Fig. 1 unteren, einem Prüfstück 30 in Form eines Rohres zugewandten Seite, ist ein Prüfkopf 32 angeordnet. In bekannter Weise ist der Zwischenraum zwischen dem Rotor 20 und dem Prüfstück 30 durch eine Ankopplungsflüssigkeit, die in den Figuren nicht dargestellt ist, gefüllt.

Der Prüfkopfträger 28 besteht aus einem im wesentlichen becherförmigen Hauptstück 34, das in seinem verdickten Boden eine nach unten, zum Prüfstück 30 offene Kammer 36 für die Aufnahme des Prüfkopfes 32 hat. Nach oben hin ist das Hauptstück 34 rohrförmig, es hat an seiner Innenwand ein Gewinde 38. Weiterhin steht zentrisch zur Achse 40 der Bohrung 26 ein Rohrstück 42 vom verstärkten Boden nach oben vor, es hat einen unrunden Innenquerschnitt, z. B. einen Schlitz, ein Vierkanthohlprofil oder dergleichen. In diesen unrunden Innenquerschnitt greift ein entsprechend geformter Mitnehmer 44 ein, der einstückig von einem merteiligen Flansch 46 nach unten ragt. Durch Drehen des Flansches 46 wird auch das topfförmige Hauptstück 34 gedreht, Entfernungsunterschiede zwischen den beiden Teilen 34, 46 werden dadurch ausgeglichen, daß der Mitnehmer 44 mehr oder weniger tief in das Rohrstück 42 eintaucht, ohne daß die Kupplung zwischen dem Rohr 42 und dem Mitnehmer 44 verloren geht.

Im gezeigten Ausführungsbeispiel ist der Flansch 46 zweiteilig ausgeführt, er besteht aus einer Scheibe 47 und einem Ring 49. Der Ring ist ein feststehendes Teil, er ist mittels einer Schraube, wie aus Fig. 1 ersichtlich, fixiert. Die zentrische Scheibe 47 kann gedreht werden, an ihr befindet sich der Mitnehmer 44 sowie außen in seiner Verlängerung ein Vierkant. Mittels einer Pratze 51 wird eine eingestellte Winkelposition der Scheibe 47 gegenüber dem Ring 49 festgehalten.

Zwischen Flansch 46 und Hauptstück 34 ist ein Gegenstück 48 angeordnet, das im wesentlichen vom Ring 49 des Flansches 46 übergriffen wird und ein nach unten weisendes Rohrteil hat, das ein dem Innengewinde 38 entsprechendes Außengewinde aufweist. Wird dieses Gegenstück 48 fixiert, die Scheibe 47 des Flansch 46 aber gedreht, so dreht sich das Hauptstück 34 und damit auch der Prüfkopf 32 um die Achse 40 der Bohrung 26 und bewirkt damit eine geänderte Winkellage des Hauptstücks 34 innerhalb der Bohrung 26. Durch Drehen des Gegenstücks 48, das eine Außenverzahnung aufweist, in die ein um den Rotor umlaufender Zahnkranz 50 eingreift, kann das Hauptstück 34 in Richtung der Achse 40 der Bohrung 26 verstellt werden, damit ändert sich der Abstand des Prüfkopfes 32 vom Prüfstück 30, ohne Änderung der Winkellage. Wird zusätzlich zum Gegenstück 48 auch der Flansch 46 mitgedreht, so ändert sich die Winkellage des Hauptstücks 34 innerhalb der Bohrung 26, ohne daß sich der axiale Abstand ändert. Für beide beschriebenen Einstellbewegungen sind Skalen (nicht dargestellt) vorgesehen.

Der Prüfkopf hat (physikalisch gesehen) eine L-ähnliche Ausbildung. Innerhalb der Kammer 36 ist er um eine Achse 52 innerhalb eines Winkelbereichs schwenkbar angeordnet, diese Schwenkachse 52 schneidet die Achse 40 der Bohrung 26 rechtwinkelig. Der in Fig. 1 nach unten weisende Schenkel ist mit einem (hier nicht näher dargestellten) Ultraschallelement versehen, es ist über eine Anschlußleitung 54 elektrisch angeschlossen. Der andere Schenkel bildet eine Gabel, die Zapfen einer Mutter führt, welche ein erstes Schraubteil 56 bildet. Dieses steht in Eingriff mit einer Spindel, die ein zweites Schraubteil 58 verkörpert. Die Spindel ist im verdickten Boden des Hauptstücks 34 drehgelagert, sie verläuft parallel zur Achse 40 der Bohrung 26 und im Abstand von dieser. Sie ist durch eine Dichtung abgedichtet. Nach oben setzt sie sich in eine längenveränderliche Kupplung fort, mittels eines von außen zugänglichen Vierkants 60 kann die das zweite Schraubteil bildende Spindel 58 gedreht werden mit der Folge, daß der Prüfkopf 32 seine Neigung verändert. Dies ist in den Figuren 1 und 2 durch unterschiedliche Pfeile angedeutet: Die ausgezogen dargestellten Pfeile 62 beschreiben den Schallweg für die aktuelle Winkelposition, die strichpunktierten Pfeile gehören zu unterschiedlichen, geänderten Winkelpositionen des Prüfkopfes 32.

Wie Fig. 1 erkennen läßt, kann der Prüfkopf 32 im Uhrzeigersinn etwa um einen Winkel von 35 Grad aus der Senkrechten, in der die Achse 40 seinen ersten Schenkel mittig durchläuft, verschwenkt werden. Dabei kann er gegen den Uhrzeigersinn über die vertikale Position (in Fig. 1 gesehen nach rechts) hinausgeschwenkt werden.

Prinzipiell genügt jedoch die Winkelverstellung zu einer Richtung hin, da die Neigung in die andere Richtung (in Fig. 1 nach rechts) durch Drehen des Hauptstücks 34 um 180 Grad erhalten wird.

Im bisher beschriebenen Ausführungsbeispiel nach den Figuren 1 und 2 ist der Prüfkopfträger 28 in einer Bohrung 26 des Rotors angeordnet. Die folgenden Ausführungsbeispiele beziehen sich auf Ausbildungen, bei denen mehrere Prüfkopfträger 28 jeweils in einer Bohrung 26 eines Halters 68 angeordnet sind, der seinerseits radial in den Rotor 20 eingesetzt ist, in den gezeigten Ausführungsbeispielen sind hierzu Bohrungen 70 im Rotor 20 vorgesehen, jeweils eine Bohrung nimmt einen derartigen Halter 68 auf.

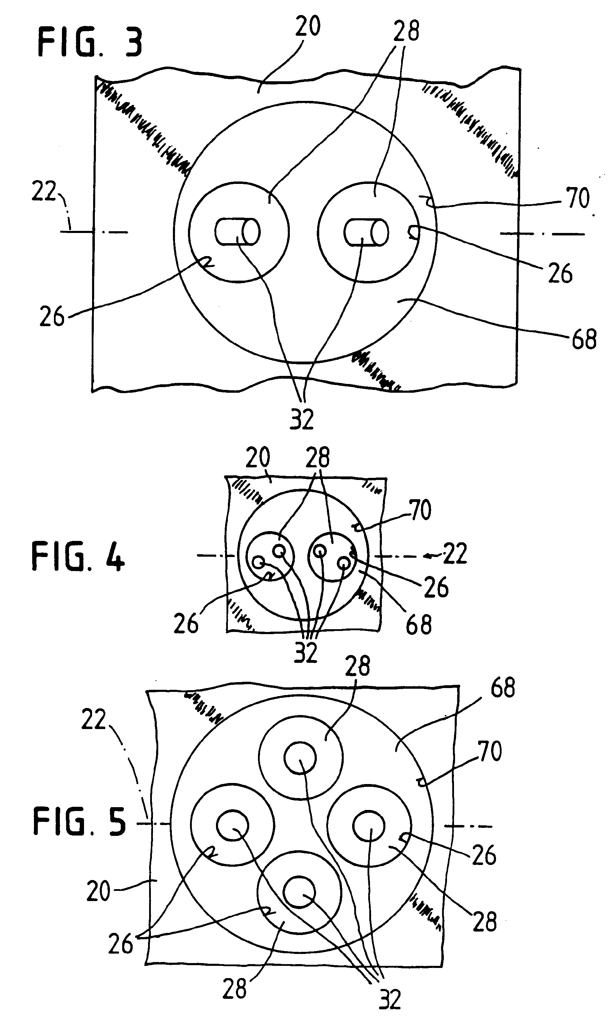

Die Prüfkopfträger 28 nach den Ausführungsbeispielen gemäß Fig. 3 bis 5 können ebenso aufgebaut sein wie der Prüfkopfträger 28 nach dem beschriebenen Ausführungsbeispiel gemäß Fig. 1 und 2, also axial verstellbar und dreheinstellbar um die Achse 40. Zugleich kann auch der Halter zumindestens eine dieser Funktionen haben. Es ist günstig, ihn um die Achse der Bohrung 70 drehbar auszubilden. Eine axiale Einstellbarkeit innerhalb der Bohrung 70 ist ebenfalls günstig.

In jedem Prüfkopfträger 28 ist mindestens ein Prüfkopf 32 angeordnet. Dieser muß nicht notwendigerweise winkeleinstellbar sein wie im Ausführungsbeispiel nach den Figuren 1 und 2, vielmehr können auch Prüfköpfe mit fest vorgegebener Winkelcharakteristik, beispielsweise mit einem Winkel von 30° zur Achse 40, eingesetzt werden.

In einer typischen Ausführung werden die Prüfköpfe 32 so eingestellt, daß sie auf einen Punkt der Oberfläche des Prüfstücks 30 ausgerichtet sind. Durch Schrägeinstrahlung von zwei Seiten wird erreicht, daß in unterschiedlicher Orientierung vorliegende Schrägfehler zumindest mit einem Prüfkopf 32 erfaßt werden.

Fig. 3 zeigt einen zylindrischen Halter 68, in dem exzentrisch, um 180° versetzt und mit gleichem Abstand vom Zentrum zwei achsparellele Bohrungen 26 ausgeführt sind, in die je ein Prüfkopfträger 28 mit je einem Prüfkopf 32 eingesetzt ist. Der Halter 68 selbst befindet sich in einer radialen Bohrung 70 des Rotors 20.

Im Ausführungsbeispiel nach Fig. 4 sind im Gegensatz zu Fig. 3 pro Prüfkopfträger 28 zwei Prüfköpfe 32 vorgesehen, hier handelt es sich um Winkelprüfköpfe, die nicht winkeleinstellbar sind.

Das Ausführungsbeispiel nach Fig. 5 schließlich zeigt einen Halter 68 mit vier gleichverteilt auf einem Teilkreis vorgesehenen Bohrungen 26 für insgesamt vier Prüfkopfträger 28. Jeder Prüfkopfträger 28 hat einen Prüfkopf 32, der nicht winkeleinstellbar ist.

Zum Ausgleich von Unwuchten durch axiale Verstellung des Hauptstücks 34 ist entweder in der diametral gegenüberliegenden Bohrung 26 des Rotors 20 ebenfalls ein Prüfkopfträger 28 untergebracht oder in einer diametral gegenüberliegenden Bohrung 70 des Rotors ebenfalls ein Halter 68 mit mindestens einem Prüfkopfträger 28 untergebracht. In beiden Fällen sind die eingebauten Anordnungen baugleich. Verfahrensmäßig wird so vorgegangen, daß die Einbauten gleich eingestellt werden, wodurch Unwuchten kompensiert sind.

## Patentansprüche

1. Rotor einer Ultraschall-Prüfvorrichtung für rotationssymmetrische Prüfstücke, insbesondere Rohre, wobei der Rotor (20) mindestens einen Prüfkopfträger (28) aufnimmt, der a) in einer radialen Bohrung angeordnet ist, b) mindestens einen Prüfkopf (32) enthält, c) in Richtung der Achse (40) der Bohrung (26) längsverstellbar angeordnet ist und d) in der Bohrung (26) abgedichtet gehalten ist,
dadurch gekennzeichnet, daß der Prüfkopfträger (28) innerhalb der Bohrung (26) um die Achse (40) dieser Bohrung (26) dreheinstellbar angeordnet ist.

2. Rotor nach Anspruch 1, dadurch gekennzeichnet, daß der Prüfkopf (32) um eine quer zur Achse (40) der Bohrung (26) des Rotors verlaufende Schwenkachse (52) neigungseinstellbar ist, daß der Prüfkopf (32) ein erstes Schraubteil (56) aufweist, das sich außerhalb dieser Schwenkachse (52) befindet, und daß diesem ersten Schraubteil (56) ein zweites Schraubteil (58) zugeordnet ist, das sich in Richtung der Achse (40) der Bohrung (26) erstreckt und mit einer an der Außenseite des Prüfkopfträgers (28) zugänglichen Dreheinstellvorrichtung verbunden ist.

3. Rotor nach Anspruch 1 oder 2, dadurch gekennzeichnet, daß der Prüfkopfträger (28) in einer Bohrung (26) des Rotors (20) angeordnet ist.

4. Rotor nach Anspruch 1 oder 2, dadurch gekennzeichnet, daß in einer radialen Bohrung (70) des Rotors (20) ein Halter (68) angeordnet ist, in dem mindestens eine Bohrung (26) für einen Prüfkopfträger (28) vorgesehen ist.

5. Rotor nach einem der Ansprüche 1 bis 4, dadurch gekennzeichnet, daß der Prüfkopfträger (28) ein Hauptstück (34), einen Flansch (46) und ein Gegenstück (48) aufweist, daß am Hauptstück (34) der Prüfkopf (32) angeordnet ist, daß das Hauptstück in Gegenrichtung zum Prüfkopf (32) ein Gewinde (38) aufweist, daß das Gegenstück (48) ein entsprechendes, axiales Gewindestück aufweist, das mit dem Gewinde (38) in Eingriff ist, und daß der Flansch (46) über eine längenveränderliche Kupplung (44, 42) mit dem Hauptstück (34) drehstarr verbunden ist.

6. Rotor nach Anspruch 5, dadurch gekennzeichnet, daß der Flansch (46) aus einer Scheibe (47) und einem Ring (49) aufgebaut ist, daß der Ring (49) feststehend angeordnet ist und eine Führung für die Drehung des Gegenstücks (48) ausbildet, daß an der Scheibe (47) ein Mitnehmer (44) der Kupplung (44, 42) angeordnet ist, und daß eine Feststellvorrichtung (Pratze 51) zwischen Ring (49) und Scheibe (47) vorgesehen ist.

7. Rotor nach einem der Ansprüche 1 bis 6, dadurch gekennzeichnet, daß in zwei diametral gegenüberliegenden, baugleichen Bohrungen (26) baugleiche Prüfkopfträger (28) angeordnet sind.

## Claims

1. Rotor of an ultrasonic test device for rotationally symmetrical test specimens, especially tubes, in which the rotor (20) holds at least one probe carrier (28), which a) is mounted in a radial borehole, b) contains at least one probe (32), c) is mounted in such a way that it can be moved longitudinally in the direction of the axis (40) of the borehole (26), and d) is tightly sealed in the borehole (26),
characterized by the fact that the probe carrier (28) is mounted inside the borehole (26) in such a way that it is rotationally adjustable about the axis (40) of this borehole (26).

2. Rotor in accordance with Claim 1, characterized by the fact that the inclination of the probe (32) can be adjusted about an axis of rotation (52) running transverse to the axis (40) of the borehole (26) of the rotor, that the probe (32) has a first screw part (56) located outside of this axis of rotation (52), and that this first screw part (56) is associated with a second screw part (58), which extends in the direction of the axis (40) of the borehole (26) and is connected with a rotation adjustment device that is accessible on the outside of the probe carrier (28).

3. Rotor in accordance with Claim 1 or 2, characterized by the fact that the probe carrier (28) is mounted in a borehole (26) of the rotor (20).

4. Rotor in accordance with Claim 1 or 2, characterized by the fact that a support (68) is mounted in a radial borehole (70) of the rotor (20), in which support (68) there is at least one borehole (26) for a probe carrier (28).

5. Rotor in accordance with any of Claims 1 to 4, characterized by the fact that the probe carrier (28) has a main piece (34), a flange (46) and a counterpart (48), that the probe (32) is mounted on the main piece (34), that the main piece (34) has threading (38) in the opposite direction to the probe (32), that the counterpart (48) has a corresponding, axial threaded part, which engages the threading (38), and that the flange (46) is connected with the main piece (46) in a torsionally rigid way via a variable-length coupling (44, 42).

6. Rotor in accordance with Claim 6, characterized by the fact that the flange (46) consists of a disk (47) and a ring (49), that the ring (49) is rigidly mounted and forms a guide for the rotation of the counterpart (48), that a driver (44) of the coupling (44, 42) is mounted on the disk (47), and that a locking device (claw 51) is provided between the ring (49) and disk (47).

7. Rotor in accordance with any of Claims 1 to 6, characterized by the fact that probe carriers (28) of the same construction are mounted in two diametrically opposite boreholes (26) of the same construction.

## Revendications

1. Rotor de dispositif de contrôle aux ultra-sons pour éprouvettes d'essai à symétrie de rotation, notamment tuyaux, le rotor (20) pouvant au moins recevoir un support de tête d'essai (28) qui a) est logé dans un perçage radial, b) contient au moins une tête d'essai (32), c) est disposé dans le sens de l'axe (40) du perçage (26) de manière à pouvoir être réglé longitudinalement et d) est maintenu étanchéisé dans le perçage (26),
caractérisé par le fait que, à l'intérieur du perçage (26), le support de la tête d'essai (28) est disposé de manière à pouvoir être tourné autour de l'axe (40) du dit perçage (26).

2. Rotor selon la revendication 1, caractérisé par le fait que la tête d'essai (32) est réglable par inclinaison autour d'un axe orientable (52) perpendiculaire à l'axe (40) du perçage (26) du rotor, que la tête d'essai (32) présente un premier élément à visser (56), lequel se trouve en dehors de cet axe orientable (52) et qu'un deuxième élément à visser (58) est affecté au premier élément (56), l'élément (58) s'étirant dans le sens de l'axe (40) du perçage (26) et étant relié à un dispositif de réglage rotatif accessible par le côté extérieur du support de tête d'essai (28).

3. Rotor selon la revendication 1 ou 2, caractérisé par le fait que le support de tête d'essai (28) est logé dans un perçage (26) du rotor (20).

4. Rotor selon la revendication 1 ou 2, caractérisé par le fait qu'un support (68) qui prévoit au moins un perçage (26) pour un support de tête d'essai (28) est disposé dans un perçage radial (70) du rotor (20).

5. Rotor selon l'une des revendications 1 à 4, caractérisé par le fait que le support de tête d'essai (28) se compose d'un élément principal (34), d'une bride (46) et d'un contre-élément (48), que la tête d'essai (32) est disposée sur l'élément principal (34), que l'élément principal présente un filetage (38) dans le sens opposé à la tête d'essai (32), que le contre-élément (48) présente un élément fileté axial correspondant qui est en prise avec le filetage (38) et que la bride (46) est reliée de manière rigide à l'élément principal (34) par un accouplement à longueur variable (44, 42).

6. Rotor selon la revendication 5, caractérisé par le fait que la bride (46) se compose d'un disque (47) et d'une bague (49), que la bague (49) est montée de manière fixe et qu'elle forme un guidage pour la rotation du contre-élément (48), qu'un entraîneur (44) de l'accouplement (44, 42) est disposé sur le disque (47) et qu'un dispositif d'arrêt (griffe 51) est prévu entre la bague (49) et le disque (47).

7. Rotor selon l'une des revendications 1 à 6, caractérisé par le fait que des supports de tête d'essai (28) de type identique sont disposés dans deux perçages (26) de type identique et diamétralement opposés.
